# EUROPEAN PATENT APPLICATION

(11) **EP 4 369 504 A1**
(43) Date of publication of application: **15.05.2024**
(21) Application number: 23756508.0
(22) Date of filing: 03.01.2023
(51) Int. Cl.: H01M 50/434, H01M 50/449, H01M 50/426, H01M 50/44, H01M 10/052

(54) **POROUS COMPOSITE CERAMIC SEPARATOR, ELECTROCHEMICAL DEVICE COMPRISING THE SAME, AND METHOD OF PREPARING THE POROUS COMPOSITE CERAMIC SEPARATOR**

(30) Priority: 18.02.2022 KR 20220021241
(71) Applicant: LG ENERGY SOLUTION, LTD., Seoul 07335 (KR)
(72) Inventor: KIM, Kyoung-Ho, Daejeon 34122 (KR); LEE, Ji-Su, Daejeon 34122 (KR)
(74) Representative: Hoffmann Eitle
(86) International application number: PCT/KR2023/000103
(87) International publication number: WO 2023/158095

(57) **Abstract**

The present disclosure provides a porous composite ceramic separator comprising a porous ceramic separator substrate comprising inorganic particles and a binder polymer to bind and interconnect the inorganic particles one another; and a coating layer coated on at least one surface of the porous ceramic separator, and comprising a mixture of binder polymer particles and staple fibers.

The porous composite ceramic separator of the present disclosure has high thermal safety by the use of the porous ceramic separator substrate, can prevent tensile strength decline and shows good resistance characteristics and assembly characteristics into an electrochemical device.

## Description

### TECHNICAL FIELD

The present disclosure relates to a porous composite ceramic separator using a porous ceramic separator substrate comprising inorganic particles as the main component, an electrochemical device comprising the same and a method for manufacturing the porous composite ceramic separator.

The present application claims priority to Korean Patent Application No. 10-2022-0021241 filed on February 18, 2022 in the Republic of Korea, the disclosure of which is incorporated herein by reference.

### BACKGROUND ART

Recently, there is increasing attention paid to energy storage technology. With an extended range of applications as sources of energy for mobile phones, camcorders and laptop computers and even electric vehicles, more efforts are being made in the research and development of electrochemical devices. In this aspect, in the field of electrochemical devices attracting most attention, the development of rechargeable secondary batteries, for example, lithium secondary batteries is the center of attention.

In the battery, the basic requirements of a separator include separation and electrical insulation of a positive electrode from a negative electrode and high ionic conductivity by high ion permeability, for example, lithium ions based on high porosity. The commonly used substrate of the separator usually includes polymer separator substrates made of polyolefin-based materials such as polyethylene (PE) and polypropylene (PP) since it is easy to form pores and is good at chemical resistance, mechanical properties and thermal characteristics.

However, the separators using the polymer separator substrates suffer an internal short circuit due to shrinkage of the separators at high temperature, and when thermal runaway occurs, the polymer separator substrates melt, resulting in increased fire risks. Accordingly, so-called ceramic separators comprising inorganic particles as the main component instead of the polymer separator substrates have been developed.

The ceramic separators comprise inorganic particles in substantial contact with each other, and binder polymers to bind and interconnect the inorganic particles one another, and voids between the inorganic particles become pores which make the separators perform their function. Accordingly, the ceramic separators have very high thermal safety.

However, the ceramic separators have low tensile strength, causing defects in assembling into electrochemical devices, for example, assembling with electrodes.

### DISCLOSURE

### Technical Problem

The present disclosure is directed to providing a porous composite ceramic separator that has high thermal safety by the use of a porous ceramic separator substrate, can prevent tensile strength decline and shows good resistance characteristics and assembly characteristics into an electrochemical device and a method for manufacturing the same.

The present disclosure is further directed to providing an electrochemical device comprising the porous composite ceramic separator having the above-described features.

### Technical Solution

An aspect of the present disclosure provides a porous composite ceramic separator according to the following embodiments.

A first embodiment relates to the porous composite ceramic separator comprising a porous ceramic separator substrate comprising inorganic particles and a binder polymer to bind and interconnect the inorganic particles one another; and a coating layer coated on at least one surface of the porous ceramic separator, and comprising a mixture of binder polymer particles and staple fibers.

A second embodiment relates to the porous composite ceramic separator according to the first embodiment, wherein the binder polymer particles include rubber-based particles or polyacrylate-based particles.

A third embodiment relates to the porous composite ceramic separator according to any one of the first and second embodiments, wherein an average particle size of the binder polymer particles is 50 to 1000 nm.

A fourth embodiment relates to the porous composite ceramic separator according to any one of the first to third embodiments, wherein an average length of the staple fibers is 0.5 to 10 µm.

A fifth embodiment relates to the porous composite ceramic separator according to any one of the first to fourth embodiments, wherein an average diameter of the staple fibers is 200 nm or less.

A sixth embodiment relates to the porous composite ceramic separator according to any one of the first to fifth embodiments, wherein the staple fibers are cellulose-based fibers.

A seventh embodiment relates to the porous composite ceramic separator according to any one of the first to fifth embodiments, wherein a mix ratio of (a weight ratio) of the binder polymer particles and the staple fibers is 95:5 to 20:80.

An eighth embodiment relates to the porous composite ceramic separator according to any one of the first to sixth embodiments, wherein a thickness of the coating layer is 3 µm or less.

A ninth embodiment relates to the porous composite ceramic separator according to any one of the first to seventh embodiments, wherein the inorganic particles comprise at least one selected from the group consisting of SrTiO₃, SnO₂, CeO₂, MgO, NiO, CaO, ZnO, ZrO₂, Y₂O₃, Al₂O₃, AlOOH, Al(OH)₃, TiO₂ and SiC.

A tenth embodiment relates to the porous composite ceramic separator according to any one of the first to ninth embodiments, wherein the binder polymer is at least one selected from the group consisting of polyvinylidene fluoride, polyvinylidene fluoride-co-hexafluoropropylene, polyvinylidene fluoride-co-trichloroethylene, polymethylmethacrylate, polyethylhexyl acrylate, polybutylacrylate, polyacrylonitrile, polyvinylpyrrolidone, polyvinylacetate, polyethylene-co-vinyl acetate, polyethylene oxide, polyarylate, cellulose acetate, cellulose acetate butyrate, cellulose acetate propionate, cyanoethylpullulan, cyanoethylpolyvinylalcohol, cyanoethylcellulose, cyanoethyl sucrose, pullulan and carboxyl methyl cellulose.

An eleventh embodiment relates to the porous composite ceramic separator according to any one of the first to tenth embodiments, wherein a mix ratio (a weight ratio) of the inorganic particles and the binder polymer is 50: 50 to 99: 1.

A twelfth embodiment relates to the porous composite ceramic separator according to any one of the first to eleventh embodiments, wherein the tensile strength of the porous composite ceramic separator is 180 kgf/cm² or more.

Another aspect of the present disclosure provides an electrochemical device of the following embodiments.

A thirteenth embodiment relates to the electrochemical device comprising: a positive electrode, a negative electrode and a separator between the positive electrode and the negative electrode, wherein the separator is the porous composite ceramic separator according to any one of the first to twelfth embodiments.

A fourteenth embodiment relates to the electrochemical device according to the thirteenth embodiment, wherein the electrochemical device is a lithium secondary battery.

Still another aspect of the present disclosure provides a method for manufacturing a porous composite ceramic separator according to the following embodiments.

A fifteenth embodiment relates to the method for manufacturing a porous composite ceramic separator comprising (S1) coating a slurry in which inorganic particles are dispersed and a binder polymer is dissolved in a solvent on a support, drying and peeling off from the support to prepare a porous ceramic separator substrate; and (S2) coating an aqueous slurry in which binder polymer particles and staple fibers are dispersed on at least one surface of the porous ceramic separator substrate and drying to form a coating layer.

A sixteenth embodiment relates to the method for manufacturing the porous composite ceramic separator according to the fifteenth embodiment, wherein the binder polymer particles are rubber-based particles or polyacrylate-based particles.

A seventeenth embodiment relates to the method for manufacturing the porous composite ceramic separator according to any one of the fifteenth and sixteenth embodiments, wherein the staple fibers are cellulose-based fibers.

An eighteenth embodiment relates to the method for manufacturing the porous composite ceramic separator according to any one of the fifteenth to seventeenth embodiments, wherein a mix ratio (a weight ratio) of the binder polymer particles and the staple fibers is 95:5 to 20:80.

### Advantageous Effects

The porous composite ceramic separator of the present disclosure has high thermal safety by the use of the porous ceramic separator substrate.

Additionally, the coating layer comprising the mixture of the particulate binder polymer and the fibers on the surface of the porous ceramic separator reinforces the tensile strength of the ceramic separator, accordingly, it is possible to prevent short circuits that may occur when assembling electrochemical devices or insulation defects that may occur after lamination with electrodes.

The electrochemical device comprising the porous composite ceramic separator shows good resistance characteristics.

### DESCRIPTION OF DRAWING

The accompanying drawing illustrates an exemplary embodiment of the present disclosure, and together with the foregoing disclosure, serve to provide further understanding of the technical aspect of the present disclosure, and thus the present disclosure should not be construed as being limited to the drawing.

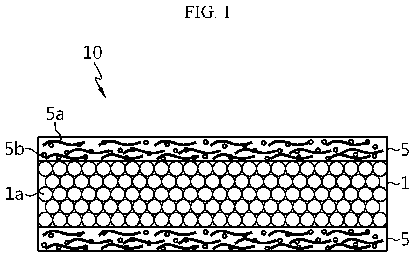

FIG. 1 is an example of a cross-sectional view of a porous composite ceramic separator manufactured according to an embodiment of the present disclosure.

### BEST MODE

Hereinafter, the present disclosure will be described in detail. Prior to the description, it should be understood that the terms or words used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the embodiment described herein and the illustration shown in the drawing is just an exemplary embodiment of the present disclosure, but not intended to fully describe the technical aspect of the present disclosure, so it should be understood that a variety of other equivalents and modifications could have been made thereto at the time that the application was filed.

A porous composite ceramic separator according to an aspect of the present disclosure comprises:
a porous ceramic separator substrate comprising inorganic particles and a binder polymer to bind and interconnect the inorganic particles one another; and
a coating layer coated on at least one surface of the porous ceramic separator, and comprising a mixture of binder polymer particles and staple fibers.

FIG. 1 is an example of a cross-sectional view of the porous composite ceramic separator manufactured according to an embodiment of the present disclosure. The porous composite ceramic separator of the present disclosure will be described with reference to FIG. 1, but is not limited thereto.

### <Porous ceramic separator substrate>

The porous composite ceramic separator 10 comprises a porous ceramic separator substrate 1 as a separator substrate. The porous ceramic separator substrate 1 comprises inorganic particles 1a that form the framework, and a binder polymer (not shown) to bind and interconnect the inorganic particles 1a one another. The binder polymer is present over all or part of the surface of the inorganic particles 1a and performs the above-described function. Accordingly, voids between the inorganic particles 1a become pores through which lithium ions pass.

As described above, the porous composite ceramic separator 10 of the present disclosure does not use a polymer separator substrate such as a polyolefin separator substrate, and the porous ceramic separator substrate 1 in which the inorganic particles 1a form the framework is used as a separator substrate, leading to very high heat resistance. Additionally, since the conventional polymer separator substrate is manufactured through the stretching process, thermal shrinkage occurs in a high temperature environment, causing a short circuit, while the porous ceramic separator substrate 1 hardly suffers thermal shrinkage since the inorganic particles form the framework.

The inorganic particles 1a that form the framework of the porous ceramic separator substrate are not limited to a particular type and may include any inorganic particles that are electrochemically stable. For example, the inorganic particles that may be used in the present disclosure may include, without limitation, any inorganic particles that do not cause oxidation and/or reduction reactions in the operating voltage range (for example, 0 to 5V based on Li/Li+) of a battery applied.

The inorganic particles 1a may include, for example, high dielectric constant inorganic particles having the dielectric constant of 1 or more, and preferably 10 or more, inorganic particles having piezoelectricity and inorganic particles having the ability to transport lithium ions.

That is, the inorganic particles 1a may include, for example, at least one of SrTiO₃, SnO₂, CeO₂, MgO, NiO, CaO, ZnO, ZrO₂, Y₂O₃, Al₂O₃, AlOOH, Al(OH)₃, TiO₂ or SiC.

Additionally, the piezoelectric inorganic particles refer to a material having properties that are electrically nonconductive at atmospheric pressure, but allow electricity to flow by a change in internal structure when a predetermined pressure is applied. The piezoelectric inorganic particles have a high dielectric value with the dielectric constant of 100 or more. Additionally, when stretched or compressed by the applied predetermined pressure, electric charges are generated. A surface is positively charged and the opposite surface is negatively charged, making a difference in potential between the two surfaces. When the piezoelectric inorganic particles are used, in the event of an internal short circuit in the two electrodes by external impacts, for example, local crush and nail, a potential difference in the particles occurs due to the piezoelectricity of the inorganic particles, leading to movements of electrons between the two electrodes, i.e., a flow of a small electric current, thereby contributing to gentle battery voltage drop and its consequential safety improvement. Examples of the piezoelectric inorganic particles may include at least one of BaTiO₃, Pb(Zr,Ti)O₃ (PZT), Pb₁₋ₓLaₓZr_{1-y}Ti_{y}O3 (PLZT), Pb(Mg_{1/3}Nb_{2/3})O₃-PbTiO₃ (PMN-PT) or hafnia (HfO₂), but is not limited thereto.

The inorganic particles having the ability to transport lithium ions refer to inorganic particles that contain lithium but do not store lithium and have a function of moving lithium ions. Since the inorganic particles having the ability to transport lithium ions can transport and move lithium ions due to a type of defect present in the particle structure, lithium ionic conductivity in a battery is improved, thereby contributing to the improved battery performance. Examples of the inorganic particles having the ability to transport lithium ions may include at least one of lithium phosphate (Li₃PO₄), lithium titanium phosphate (LiₓTi_{y}(PO₄)₃) (0<x<2, 0<y<3), lithium aluminum titanium phosphate (LiₓAl_{y}Ti_{z}(PO₄)₃) (0<x<2, 0<y<1, 0<z<3), (LiAlTiP)ₓO_{y} based glass (0<x<4, 0<y<13) such as 14Li₂O-9Al₂O₃-38TiO₂-39P₂O₅, lithium lanthanum titanate (LiₓLa_{y}TiO₃) (0<x<2, 0<y<3), lithium germanium thiophosphate (LiₓGe_{y}P_{z}S_{w}) (0<x<4, 0<y<1, 0<z<1, 0<w<5) such as Li_{3.25}Ge_{0.25}P_{0.75}S₄, lithium nitride (LiₓN_{y}) (0<x<4, 0<y<2) such as Li₃N, SiS₂ based glass (LiₓSi_{y}S_{z}) (0<x<3, 0<y<2, 0<z<4) such as Li₃PO₄-Li₂S-SiS₂ or P2S5 based glass (LiₓP_{y}S_{z}) (0<x<3, 0<y<3, 0<z<7) such as LiI-Li₂S-P₂S₅, but is not limited thereto.

The particle size of the inorganic particles is not limited to a particular size, but preferably ranges from 0.001 µm to 10 µm for formation of a film having uniform thickness and optimal porosity. The pore size of the porous ceramic separator substrate may be controlled by adjusting the particle size of the inorganic particles and the amount of the binder polymer.

The binder polymer in the porous ceramic separator substrate 1 is not limited to a particular type and may include any binder polymer that can perform the function of binding and interconnecting the inorganic particles 1a one another. In particular, binder polymers having the melting temperature of 150°C or more, and more preferably 200°C or more, for example, may be used.

Meanwhile, the binder polymer may form a gel when it is wetted in a liquid electrolyte solution. In the case of the polymer having high wettability with the electrolyte solution, the wetting of the separator in the electrolyte solution is improved by the gelation of the electrolyte solution injected after battery assembly with the binder polymer. In this aspect, for example, the binder polymer having the solubility index of 15 MPa^{1/2} to 45 MPa^{1/2} may be used.

The binder polymer may include at least one selected from the group consisting of polyvinylidene fluoride, polyvinylidene fluoride-co-hexafluoropropylene, polyvinylidene fluoride-co-trichloroethylene, polymethylmethacrylate, polyethylhexyl acrylate, polybutylacrylate, polyacrylonitrile, polyvinylpyrrolidone, polyvinylacetate, polyethylene-co-vinyl acetate, polyethylene oxide, polyarylate, cellulose acetate, cellulose acetate butyrate, cellulose acetate propionate, cyanoethylpullulan, cyanoethylpolyvinylalcohol, cyanoethylcellulose, cyanoethylsucrose, pullulan and carboxyl methyl cellulose, but is not limited thereto.

The mix ratio (weight ratio) of the inorganic particles and the binder polymer in the porous ceramic separator substrate is preferably, for example, 50: 50 to 99: 1, and more specifically 60:40 to 99: 1.

### <Coating layer>

The coating layer 5 of the porous composite ceramic separator 10 is formed on at least one surface of the porous ceramic separator substrate 1 by coating.

The coating layer 5 comprises the mixture of the binder polymer particles 5b and the staple fibers 5a.

As described above, the porous ceramic separator substrate 1 comprises the inorganic particles that form the framework and the binder polymer to bind and interconnect the inorganic particles one another, leading to low tensile strength. Accordingly, defects occur when assembling into electrochemical devices, for example, assembling with electrodes.

To solve this problem, the present disclosure comprises the coating layer 5 comprising the mixture of the binder polymer particles 5b and the staple fibers 5a on at least one surface of the porous ceramic substrate 1.

The coating layer 5 reinforces the tensile strength of the porous ceramic separator substrate 1, and accordingly, it is possible to prevent short circuits that may occur when assembling electrochemical devices or insulation defects that may occur after lamination with electrodes. Additionally, since the binder polymer particles 5b are particulate, it is possible to prevent the rise in resistance of the coating layer 5 of the porous composite ceramic separator 10.

The binder polymer particles 5b is not limited to a particular type and may include any binder polymer particles that can provide the adhesion strength with electrodes, for example, rubber-based particles or polyacrylate-based particles. For example, the rubber-based particles may include styrene butadiene rubber (SBR), acrylonitrile-butadiene rubber and acrylonitrile-butadiene-styrene rubber, and the polyacrylate-based particles may include butylacrylate-co-ethylhexylacrylate and methylmethacrylate-co-ethylhexylacrylate.

In addition to these exemplary binder polymer particles, the binder polymer particles 5b may include polyacrylonitrile, polyvinylchloride, polyvinylidene fluoride and polycyanoacrylate, but are not limited thereto.

The average particle size of the binder polymer particles in the coating layer may be 50 to 1000 nm, more specifically 100 to 600 nm, and most specifically 200 to 500 nm, but is not limited thereto.

The average length of the staple fibers 5a may be, for example, 0.5 to 10 µm, and more specifically 1 to 5 µm, but is not limited thereto. Additionally, the average diameter of the staple fibers 5a may be 200 nm or less, specifically 50 nm or less, 1 nm or more, specifically 5 nm or more, and may be 1 nm to 200 nm, and specifically 5 to 50 nm, but is not limited thereto.

The staple fibers 5a are not limited to a particular type and may include any fibers that can form the coating layer 5 on the surface of the porous ceramic separator substrate 1 to reinforce the tensile strength, for example, at least one of organic fibers or inorganic fibers, and in particular, cellulose-based fibers such as cellulose or modified cellulose that is modified to introduce a carboxyl group. The mix ratio (weight ratio) of the binder polymer particles 5b and the staple fibers 5a may be 95:5 to 20:80, and more specifically 90: 10 to 30:70, but is not limited thereto.

The thickness of the coating layer 5 may be 3 µm or less, and more specifically 2 µm or less when considering the resistance.

The tensile strength of the porous composite ceramic separator 10 comprising the porous ceramic separator substrate 1 and the coating layer 5 may be 180 kgf/cm² or more, specifically 180 to 300 kgf/cm², and more specifically 200 to 280 kgf/cm², but is not limited thereto.

### <Method for manufacturing the porous composite ceramic separator>

The porous composite ceramic separator 10 of the above-described configuration may be manufactured as below, but is not limited thereto.

The porous ceramic separator substrate is prepared by coating and drying a slurry in which inorganic particles are dispersed and a binder polymer is dissolved in a solvent on a support and peeling off from the support (step S 1).

The method for manufacturing the porous ceramic separator substrate is disclosed by PCT/KR2005/002674, the disclosure of which is incorporated herein by reference.

First, the slurry in which the inorganic particles are dispersed and the binder polymer is dissolved in the solvent is prepared. That is, the binder polymer is dissolved in an appropriate organic solvent to prepare a polymer solution and the inorganic particles are dispersed in the polymer solution.

The solvent preferably has the similar solubility index to the binder polymer intended to use and low boiling point. This is to achieve uniform mixing and makes subsequent solvent removal easy. Non-limiting examples of the solvent include at least one of acetone, tetrahydrofuran, methylene chloride, chloroform, dimethylformamide, N-methyl-2-pyrrolidone (NMP), cyclohexane or water.

The inorganic particles are added to and dispersed in the prepared polymer solution to prepare the slurry. After adding the inorganic particles to the polymer solution, it is desirable to grind the inorganic particles. In this instance, the grinding time is preferably 1 to 20 hours, and the preferred particle size of the ground inorganic particles is the same as described above. The grinding method may include the commonly used method, and in particular, ball milling is desirable. The preferred substance and mix ratio of the inorganic particles and the binder polymer is the same as described above. As the ratio of the inorganic particles I to the binder polymer P (ratio = I/P) increases, the porosity of the porous ceramic separator substrate increases. Additionally, as the particle size of the inorganic particles increases, the interstitial distance between the inorganic matters increases, and the pore size increases. The slurry may further comprise a dispersing agent, if necessary.

The prepared slurry is coated on the support, dried and peeled off from the support to obtain the porous ceramic separator substrate. In this instance, the support may include sheets or films commonly used in the corresponding technical field, for example, a Teflon sheet, but is not limited thereto.

The process of coating the slurry on the support may be performed by the commonly used coating method. In particular, it is desirable to perform the coating process through dip coating, die coating, roll coating, comma coating or a combination thereof.

Subsequently, an aqueous slurry containing a binder polymer particles and staple fibers dispersed therein is coated on at least one surface of the manufactured porous ceramic separator substrate and dried to form the coating layer (step S2).

The preferred type and composition of the binder polymer particles and the staple fibers is the same as described above, and the aqueous slurry is prepared by adding, mixing and dispersing the binder polymer particles and the staple fibers in an aqueous dispersion medium such as water and alcohol.

The coating method of the aqueous slurry may be the coating method used to form the porous ceramic separator substrate.

According to another embodiment of the present disclosure, there is provided an electrochemical device comprising the porous composite ceramic separator.

The electrochemical device comprises a positive electrode, a negative electrode and a separator between the positive electrode and the negative electrode, wherein the separator is the porous composite ceramic separator manufactured by the above-described method, wherein the porous composite ceramic separator comprises a ceramic separator substrate, rather than a polymer separator substrate, and a coating of a mixture of binder polymer particles and staple fibers to reinforce the tensile strength, thereby reducing assembly defects when assembling the electrochemical device.

Specifically, the electrochemical device may be a battery or a capacitor, and more specifically, a lithium secondary battery.

Hereinafter, the configuration of the lithium secondary battery will be described in more detail.

The positive electrode includes a positive electrode current collector and a positive electrode active material layer on the positive electrode current collector.

In the positive electrode, the positive electrode current collector is not limited to a particular type and may include those having conductive properties without causing any chemical change to the battery, for example, stainless steel, aluminum, nickel, titanium, sintered carbon, aluminum or stainless steel treated with carbon, nickel, titanium or silver on the surface. Additionally, the positive electrode current collector may be typically 3 to 500 µm in thickness, and have microtexture on the surface to improve the adhesion strength of the positive electrode active material. For example, the positive electrode current collector may come in various forms, for example, films, sheets, foils, nets, porous bodies, foams and non-woven fabrics.

The positive electrode active material layer may comprise a positive electrode active material well known in the corresponding technical field, a conductive material and a binder.

The positive electrode active material may include layered compounds or compounds with one or more transition metal such as lithium cobalt oxide (LiCoO₂), lithium nickel oxide (LiNiO₂); lithium manganese oxide of formula Li₁₊ₓMn₂₋ₓO₄ (x = 0 to 0.33), LiMnO₃, LiMn₂O₃, LiMnO₂; lithium copper oxide (Li2CuO₂); vanadium oxide such as LiVsOs, V₂O₅, Cu₂V₂O₇; Ni site lithium nickel oxide represented by formula LiNi₁₋ₓMₓO₂ (M = Co, Mn, Al, Cu, Fe, Mg, B or Ga, x = 0.01 to 0.3); lithium manganese composite oxide represented by formula LiMn₂₋ₓMₓO₂ (M = Co, Ni, Fe, Cr, Zn or Ta, x = 0.01 to 0.1) or Li₂Mn₃MO₈ (M = Fe, Co, Ni, Cu or Zn); LiMn₂O₄ with partial substitution of alkali earth metal ion for Li in the formula; disulfide compounds and Fe₂(MoO₄)₃, but is not limited thereto.

The conductive material is used to impart conductive properties to the electrode, and may include, without limitation, any type of conductive material capable of conducting the flow of electrons without causing any chemical change in the battery. Specific examples of the conductive material may include at least one of graphite, for example, natural graphite or artificial graphite; carbon-based materials, for example, carbon black, acetylene black, ketjen black, channel black, furnace black, lamp black, thermal black and carbon fibers; metal powder or metal fibers, for example, copper, nickel, aluminum and silver; conductive whiskers, for example, zinc oxide and potassium titanate; conductive metal oxide, for example, titanium oxide; or conductive polymers, for example, polyphenylene derivatives. The conductive material may be typically included in an amount of 1 to 30 weight% based on the total weight of the positive electrode active material layer.

The binder plays a role in improving the bonds between the positive electrode active material particles and the adhesion strength between the positive electrode active material and the positive electrode current collector. Specific examples of the binder may include, but is not limited to, at least one of polyvinylidene fluoride (PVDF), polyvinylidene fluoride-hexafluoropropylene copolymer (PVDF-co-HFP), polyvinylalcohol, polyacrylonitrile, carboxymethylcellulose (CMC), starch, hydroxypropyl cellulose, regenerated cellulose, polyvinylpyrrolidone, tetrafluoroethylene, polyethylene, polypropylene, ethylenepropylene-diene polymer (EPDM), sulfonated-EPDM, styrene butadiene rubber (SBR), fluoro rubber, or a variety of copolymers thereof. The binder may be included in an amount of 1 to 30 weight% based on the total weight of the positive electrode active material layer.

The positive electrode may be manufactured by the commonly used positive electrode manufacturing method. Specifically, a solvent dissolved or dispersed with a positive electrode active material layer forming composition comprising the positive electrode active material, and optionally, the binder and the conductive material may be coated the positive electrode current collector and dried and rolling may be performed to manufacture the positive electrode. In this instance, the type and amount of the positive electrode active material, the binder and the conductive material are the same as described above.

The solvent may include solvents commonly used in the corresponding technical field, for example, at least one of dimethyl sulfoxide (DMSO), isopropyl alcohol, N-methylpyrrolidone (NMP), acetone or water. The solvent is present in a sufficient amount to have optimal viscosity to dissolve or disperse the positive electrode active material, the conductive material and the binder in view of the coating thickness and preparation yield of the slurry, and subsequently, exhibit good thickness uniformity when coating for the manufacture of the positive electrode.

Additionally, another method for manufacturing the positive electrode may include casting the positive electrode active material layer forming composition on a support, peeling off a film from the support and laminating the film on the positive electrode current collector.

The negative electrode includes a negative electrode current collector and a negative electrode active material layer on the negative electrode current collector.

The negative electrode current collector may include any type of material having high conductivity without causing any chemical change to the battery, for example, copper, stainless steel, aluminum, nickel, titanium, sintered carbon, copper or stainless steel treated with carbon, nickel, titanium or silver on the surface and an aluminum-cadmium alloy, but is not limited thereto. Additionally, the negative electrode current collector may be typically 3 to 500 µm in thickness, and in the same way as the positive electrode current collector, the negative electrode current collector may have microtexture on the surface to improve the bonding strength of the negative electrode active material. For example, the negative electrode current collector may come in various forms, for example, films, sheets, foils, nets, porous bodies, foams and non-woven fabrics.

The negative electrode active material layer comprises a negative electrode active material, and optionally, a binder and a conductive material. For example, the negative electrode active material layer may be formed by coating and drying a negative electrode forming composition comprising the negative electrode active material, and optionally, the binder and the conductive material on the negative electrode current collector, or casting the negative electrode forming composition on a support, peeling off a film from the support and laminating the film on the negative electrode current collector.

The negative electrode active material may include compounds capable of reversible intercalation and deintercalation of lithium. Specific examples of the negative electrode active material may include at least one of carbonaceous materials including artificial graphite, natural graphite, graphitized carbon fibers and amorphous carbon; metallic compounds capable of alloying with lithium such as Si, Al, Sn, Pb, Zn, Bi, In, Mg, Ga, Cd, Si alloy, Sn alloy or Al alloy; metal oxide capable of doping and dedoping lithium such as SiO_{β} (0<β< 2), SnO₂, vanadium oxide, lithium vanadium oxide; or composites comprising the metallic compounds and the carbonaceous materials such as Si-C composite or Sn-C composite. Additionally, a metal lithium thin film may be used for the negative electrode active material. Additionally, the carbon material may include low crystalline carbon and high crystalline carbon. The low crystalline carbon typically includes soft carbon and hard carbon, and the high crystalline carbon typically includes high temperature sintered carbon such as amorphous, platy, flaky, spherical or fibrous natural graphite or artificial graphite, Kish graphite, pyrolytic carbon, mesophase pitch based carbon fiber, meso-carbon microbeads, Mesophase pitches and petroleum or coal tar pitch derived cokes.

Additionally, the binder and the conductive material may be the same as described in the positive electrode.

Additionally, an electrolyte used in the present disclosure may include, for example, an organic liquid electrolyte, an inorganic liquid electrolyte, a solid polymer electrolyte, a gel polymer electrolyte, a solid inorganic electrolyte and a molten inorganic electrolyte that may be used to manufacture the lithium secondary battery, but is not limited thereto.

Specifically, the electrolyte may comprise an organic solvent and a lithium salt.

The organic solvent may include, without limitation, any type of organic solvent that acts as a medium for the movement of ions involved in the electrochemical reaction of the battery. Specifically, the organic solvent may include an ester-based solvent, for example, methyl acetate, ethyl acetate, γ-butyrolactone, ε-caprolactone; an ether-based solvent, for example, dibutyl ether or tetrahydrofuran; a ketone-based solvent, for example, cyclohexanone; an aromatic hydrocarbon-based solvent, for example, benzene, fluorobenzene; a carbonate-based solvent, for example, dimethylcarbonate (DMC), diethylcarbonate (DEC), methylethylcarbonate (MEC), ethylmethylcarbonate (EMC), ethylene carbonate (EC), propylene carbonate (PC); an alcohol-based solvent, for example, ethylalcohol, isopropyl alcohol; nitriles of R-CN (R is a C2 to C20 straight-chain, branched-chain or cyclic hydrocarbon, and may comprise an exocyclic double bond or ether bond); amides, for example, dimethylformamide; dioxolanes, for example, 1,3-dioxolane; or sulfolanes. Among them, the carbonate-based solvent is desirable, and more preferably, the cyclic carbonate (for example, ethylene carbonate or propylene carbonate) having high ionic conductivity and high dielectric constant which contributes to the improved charge/discharge performance of the battery may be mixed with the linear carbonate-based compound (for example, ethylmethyl carbonate, dimethyl carbonate or diethyl carbonate) of low viscosity. In this case, the cyclic carbonate and the chain carbonate may be mixed at a volume ratio of about 1:1 to about 1:9 to improve the performance of the electrolyte solution.

The lithium salt may include, without limitation, any compound that can provide lithium ions used in the lithium secondary battery. Specifically, the lithium salt may include LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂. LiCl, LiI or LiB(C₂O₄)₂. The concentration of the lithium salt may range from 0.1 to 2.0M. When the concentration of the lithium salt is included in the above-described range, the electrolyte has the optimal conductivity and viscosity, resulting in good performance of the electrolyte and effective movement of lithium ions.

In addition to the above-described constituent substances of the electrolyte, the electrolyte may further comprise, for example, at least one type of additive of a haloalkylene carbonate-based compound such as difluoro ethylene carbonate, pyridine, triethylphosphite, triethanolamine, cyclic ether, ethylene diamine, n-glyme, hexaphosphoric triamide, nitrobenzene derivatives, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride to improve the life characteristics of the battery, prevent the capacity fading of the battery and improve the discharge capacity of the battery. In this instance, the additive may be included in an amount of 0.1 to 5 weight% based on the total weight of the electrolyte.

The electrochemical device according to the present disclosure is useful in the field of mobile devices including mobile phones, laptop computers and digital cameras, and electric vehicles including hybrid electric vehicles (HEVs).

Hereinafter, the embodiment of the present disclosure will be described in sufficiently detail for those having ordinary skill in the technical field pertaining to the present disclosure to easily practice the present disclosure. However, the present disclosure may be embodied in many different forms and is not limited to the disclosed embodiment.

### Example 1

### Manufacture of porous ceramic separator substrate

Polyvinylidene fluoride is added to and dissolved in NMP to prepare a polymer solution. Al₂O₃ powder having the particle size of about 400 nm is added to the polymer solution at a ratio of 8:2 relative to the polymer to prepare a slurry having the total solid content of 20 weight%. The prepared slurry is coated on a Teflon sheet support using doctor blade, dried and peeled off from the Teflon sheet to obtain a porous ceramic separator substrate having the thickness of about 20 µm.

### Formation of coating layer

The porous ceramic separator substrate coating layer forming slurry obtained by the above-described method is dip-coated and dried to manufacture a porous composite ceramic separator having a coating layer. The coating layer forming slurry is prepared as below.

A dispersion of binder polymer particles in water [solids 15 weight%, particulate binder polymer of methylmethacrylate-co-ethylhexylacrylate, the average particle size 350 nm, Tg 40°C] is uniformly mixed with a dispersion of cellulose staple fibers in water [the average length: 3 µm, the average diameter 25 nm) (solids 5 weight%) at room temperature to prepare the coating layer forming slurry.

The mix ratio (weight ratio) of the binder polymer particles and the staple fibers in the slurry is 75:25.

### Example 2

A porous composite ceramic separator is manufactured in the same way as example 1 except that the thickness of the coating layer is changed as shown in the following Table 1.

### Comparative example 1-2

A porous composite ceramic separator is manufactured in the same way as example 1 except that when preparing the coating layer forming slurry, the dispersion of cellulose staple fibers in water is not mixed and the thickness of the coating layer is changed as shown in the following Table 1.

**[Table 1]**

| | Presence or absence of cellulose staple fibers | Coating layer thickness (Total thickness of two surfaces, µm) |
|---|---|---|
| Example 1 | O | 1 |
| Example 2 | O | 2 |
| Comparative example 1 | X | 1 |
| Comparative example 2 | X | 2 |

The properties of the porous composite ceramic separators of examples and comparative examples are evaluated and the results are shown in the following Table 2.

**[Table 2]**

| | | Example 1 | Example 2 | Comparative example 1 | Comparative example 2 |
|---|---|---|---|---|---|
| Separat or propert | Tensile strength(kgf/cm²) | 212 | 257 | 162 | 166 |
| | Electric Resistance | 1.0 | 1.3 | 1.2 | 1.8 |
| ies | (Ω) | | | | |
| | Dimensional change (%) | 1.3 | 1.2 | 2.3 | 2.2 |
| | Lamination adhesion strength [negative electrode/separator]( gf/2cm) | 30 | 33 | 31 | 38 |
| Assem bly | Insulation resistance (MΩ) | Pass/10.6/8.6 | Pass/pass/pass | 0.2/0.5/0.2 | 0.1/0.3/1.9 |
| Battery perfor mance | 0.33C initial capacity (mAh) | 72 | 70 | 69 | 63 |
| | 10s pulse R @ SOC50 (Ω) | 1.1 | 1.3 | 1.3 | 1.7 |

### <Tensile strength measurement>

Each separator of examples and comparative examples is cut into the width of 20 mm (length: 100 mm), and the tensile strength is measured using UTM in the rate condition of 500 mm/sec.

### <Electrical resistance measurement>

Each punched separator of examples and comparative examples is put in a lower plate of coin cell 2032 (Diameter: 20 mm, Thickness: 3.2 mm), a droplet of an electrolyte solution (EC/EMC=7:3, 1M LIPF₆) is added using a disposable pipet, followed by assembly with a gasket, covering with an upper plate and pressing to manufacture the coin cell, and resistance is measured by EIS.

### <Dimensional change measurement>

The separator is impregnated with the electrolyte solution for 1 hour and a dimensional change of the separator is measured using 3D dimension measurement equipment. The dimensional change may be calculated as the average of changes in horizontal and vertical dimensions.

### <Lamination adhesion strength measurement>

Natural graphite:conductive material:binder:thickening agent are added at a ratio of 95:1:3:1 parts by weight to prepare a slurry, the slurry is coated on a 20 µm copper current collector at the thickness of 150 µm and dried, and pressed such that a negative electrode is 110 µm in thickness. Subsequently, the manufactured negative electrode and separator are tailored into the area of 2cm*2cm, stacked and put in PET, and pressed under the condition of 6 MPa and 10 sec using hot press equipment, and the adhesion strength is measured using a Peel Tester.

### <Measurement of initial capacity and battery resistance>

NCM111 positive electrode active material: conductive material:binder are added at a ratio of 94:3:3 parts by weight to prepare a slurry, the slurry is coated on a 20 µm aluminum current collector at the thickness of 100 µm and dried, and pressed such that a positive electrode is 70 µm in thickness.

The positive electrode/separator/negative electrode manufactured by the above-described method are laminated and received in a pouch, the pouch is sealed up, and 300 uL of the electrolyte solution is injected to manufacture a mono-cell (3 cm*4 cm). After activation by charging at 0.1C-rate for 3 hours, 0.33C/0.33C charge/discharge is performed for three cycles and the battery capacity is evaluated. After SOC50 setting, battery resistance at SOC50 is measured by applying 2C, 10 sec pulses.

### <Insulation resistance measurement>

The mono-cell (separator/negative electrode/separator/positive electrode) is roll-laminated, and 5 mono-cells are stacked to manufacture a stacked cell.

The insulation resistance of the stacked cell is measured using Hioki resistance measurement machine, and when the insulation resistance is more than 100 MΩ, it determines a pass.

## Claims

1. A porous composite ceramic separator, comprising:
a porous ceramic separator substrate comprising inorganic particles and a binder polymer to bind and interconnect the inorganic particles one another; and
a coating layer coated on at least one surface of the porous ceramic separator, and comprising a mixture of binder polymer particles and staple fibers.

2. The porous composite ceramic separator according to claim 1, wherein the binder polymer particles include rubber-based particles or polyacrylate-based particles.

3. The porous composite ceramic separator according to claim 1, wherein an average particle size of the binder polymer particles is 50 to 1000 nm.

4. The porous composite ceramic separator according to claim 1, wherein an average length of the staple fibers is 0.5 to 10 µm.

5. The porous composite ceramic separator according to claim 1, wherein an average diameter of the staple fibers is 200 nm or less.

6. The porous composite ceramic separator according to claim 1, wherein the staple fibers are cellulose-based fibers.

7. The porous composite ceramic separator according to claim 1, wherein a mix ratio of the binder polymer particles and the staple fibers is 95:5 to 20:80 by weight.

8. The porous composite ceramic separator according to claim 1, wherein a thickness of the coating layer is 3 µm or less.

9. The porous composite ceramic separator according to claim 1, wherein the inorganic particles comprise at least one selected from the group consisting of SrTiO₃, SnO₂, CeO₂, MgO, NiO, CaO, ZnO, ZrO₂, Y₂O₃, Al₂O₃, AlOOH, Al(OH)₃, TiO₂ and SiC.

10. The porous composite ceramic separator according to claim 1, wherein the binder polymer is at least one selected from the group consisting of polyvinylidene fluoride, polyvinylidene fluoride-co-hexafluoropropylene, polyvinylidene fluoride-co-trichloroethylene, polymethylmethacrylate, polyethylhexyl acrylate, polybutylacrylate, polyacrylonitrile, polyvinylpyrrolidone, polyvinylacetate, polyethylene-co-vinyl acetate, polyethylene oxide, polyarylate, cellulose acetate, cellulose acetate butyrate, cellulose acetate propionate, cyanoethylpullulan, cyanoethylpolyvinylalcohol, cyanoethylcellulose, cyanoethylsucrose, pullulan and carboxyl methyl cellulose.

11. The porous composite ceramic separator according to claim 1, wherein a mix ratio (a weight ratio) of the inorganic particles and the binder polymer is 50: 50 to 99: 1.

12. The porous composite ceramic separator according to claim 1, wherein the tensile strength of the porous composite ceramic separator is 180 kgf/cm² or more.

13. An electrochemical device comprising: a positive electrode, a negative electrode and a separator between the positive electrode and the negative electrode,
wherein the separator is the porous composite ceramic separator according to any one of claims 1 to 12.

14. The electrochemical device according to claim 13, wherein the electrochemical device is a lithium secondary battery.

15. A method for manufacturing a porous composite ceramic separator, comprising:
(S1) coating a slurry in which inorganic particles are dispersed and a binder polymer is dissolved in a solvent on a support, drying and peeling off from the support to prepare a porous ceramic separator substrate; and
(S2) coating an aqueous slurry in which binder polymer particles and staple fibers are dispersed on at least one surface of the porous ceramic separator substrate and drying to form a coating layer.

16. The method for manufacturing the porous composite ceramic separator according to claim 15, wherein the binder polymer particles are rubber-based particles or polyacrylate-based particles.

17. The method for manufacturing the porous composite ceramic separator according to claim 15, wherein the staple fibers are cellulose-based fibers.

18. The method for manufacturing the porous composite ceramic separator according to claim 15, wherein a mix ratio of the binder polymer particles and the staple fibers is 95:5 to 20:80 by weight.
